# EUROPEAN PATENT APPLICATION

(11) **EP 4 492 485 A1**
(43) Date of publication of application: **15.01.2025**
(21) Application number: 22942130.0
(22) Date of filing: 20.05.2022
(51) Int. Cl.: H01M 4/131, H01M 50/143, H01M 10/0525

(54) **BATTERY CELL, BATTERY, AND ELECTRIC DEVICE**

(71) Applicant: Contemporary Amperex Technology (Hong Kong) Limited, Central, Central And Western District (HK)
(72) Inventor: KE, Haibo, Ningde, Fujian 352100 (CN); CHEN, Xingbu, Ningde, Fujian 352100 (CN); MAO, Guoan, Ningde, Fujian 352100 (CN); LI, Quankun, Ningde, Fujian 352100 (CN); WANG, Peng, Ningde, Fujian 352100 (CN)
(74) Representative: Jacob, Reuben Ellis
(86) International application number: PCT/CN2022/094109
(87) International publication number: WO 2023/221090

(57) **Abstract**

A battery cell (7), a battery (2), and an electric device. The battery cell (7) comprises a housing (20) and a positive electrode sheet (11), wherein the melting point of the housing (20) is N, the positive electrode sheet (11) is accommodated in the housing (20) and comprises a positive electrode active material, and the positive electrode active material comprises a lithium nickel cobalt manganese oxide, the weight of element nickel in the lithium nickel cobalt manganese oxide is G1, the sum of weights of elements nickel, cobalt and manganese is G2, and the value of G1/G2 is recorded as M; M and N satisfy: 0.1 & M & 0.65, and N ≤ (50M+500)° C; or M and N satisfy: 0.65 < M < 1, N ≥ (950M+500)° C.

## Description

### TECHNICAL FIELD

The present application relates to the field of battery technology, and in particular to a battery cell, a battery, and an electrical device.

### BACKGROUND

Battery cells are widely used in electronic devices, such as mobile phones, laptops, electric cars, electric vehicles, electric airplanes, electric ships, electric toy cars, electric toy ships, electric toy planes and electric tools.

In the development of the battery technology, how to improve the safety of a battery cell is a research direction in battery technology.

### SUMMARY

The present application provides a battery cell, a battery, and an electrical device that can improve the safety of the battery cell.

In a first aspect, embodiments of the present application provide a battery cell, which includes a shell and a positive electrode plate. The melting point of the shell is N. The positive electrode plate is accommodated within the shell and includes a positive electrode active material, which includes lithium nickel cobalt manganese oxide. A weight of a nickel element in the lithium nickel cobalt manganese oxide is G1, and the sum of weights of nickel element, a cobalt element, and a manganese element is G2. A value of G1/G2 is M. M and N meet: 0.1≤M≤ 0.65, N≥ (50M+500)°C; or M and N meet: 0.65 <M<1, N≥(950M+500)°C.

The higher the value of M, the higher the rate of gas generation by the electrode assembly and the more the heat generated by the electrode assembly during the thermal runaway, and the higher the melting point required for the shell. On the contrary, the smaller the value of M, the less the heat generated by the battery cell during the thermal runaway, and the lower the melting point required for the shell. In the above technical solution, for the battery cell that meet 0.1≤M ≤0.65, the melting point of the shell should be at least greater than or equal to (50M+500)°C to reduce the risk of the shell being melted through during the thermal runaway of the battery cell. For the battery cell that meet 0.65 <M< 1, the melting point of the shell of the battery cell should be at least greater than or equal to (950M+500)°C to reduce the risk of the shell being melted through during the thermal runaway of the battery cell.

In some embodiments, M and N meet: 0.1≤M≤0.65, N≥(200M+500)°C.

In some embodiments, M and N meet: 0.1 ≤ M ≤ 0.65, (50M+500) °C & N & (15000M+500)°C.

The above technical solution limits the melting point of the shell to less than or equal to (15000M+500)°C, which can reduce the excessive design of the melting point of the shell and facilitate the selection of the material of the shell.

In some embodiments, M and N meet: 0.65<M< 1, N≥(1000M+500)°C.

In some embodiments, M and N meet: 0.65 < M < 1, (950M+500) °C ≤ N ≤ (3000M+500)°C.

The above technical solution limits the melting point of the shell to less than or equal to (3000M+500)°C, which can reduce the excessive design of the melting point of the shell and facilitate the selection of the material of the shell.

In some embodiments, M and N meet: N≤(1800M+500)°C.

In some embodiments, the battery cell further includes a negative electrode plate accommodated within the shell. The negative electrode plate includes a negative electrode active material, which includes graphite and a silicon containing materials. The weight of the silicon containing material is B1, the weight of the graphite is B2, and the value of B1/(B1+B2) is P. P meets: 0<P<0.6.

Compared to the graphite, the silicon-containing material has a higher specific capacity. The above technical solution can effectively improve the energy density of the battery cell by replacing some graphite with the silicon containing material. However, the expansion of the silicon containing material during charging is large. If the content of the silicon containing material is too high, it will lead to excessive expansion force of the battery cell during charging, affecting the safety and the cycle life of the battery cell. The above technical solution limits the value of P to be greater than 0 but less than 0.6 to balance the energy density and the expansion force of the battery cell.

In some embodiments, the tensile strength of the shell is Q, and Q and M meet: 0.1≤ M≤0.65, Q≥(50M+50) MPa. For the battery cell that meet 0.1≤M≤0.65, the tensile strength of the shell should be at least greater than or equal to (50M+50) MPa so as to reduce the stretching amount of the shell during the thermal runaway of the battery cell, reduce the risk of the cracking of the shell, and improve the safety.

In some embodiments, Q and M meet: 0.1≤M≤0.65, Q≤(1100M+50) MPa. The tensile strength of the shell being limited to less than or equal to (1100M+50) MPa can reduce the excessive design of the tensile strength of the shell and facilitate the selection of the material of the shell.

In some embodiments, the tensile strength of the shell is Q, and Q and M meet: 0.65< M< 1, Q≥(300M+50) MPa. For the battery cell that meets 0.65 <M< 1, the tensile strength of the shell should be at least greater than or equal to (300M+50) MPa so as to reduce the stretching amount of the shell during the thermal runaway of the battery cell, reduce the risk of the cracking of the shell, and improve the safety.

In some embodiments, Q and M meet: 0.65 <M< 1, Q≤(950M+50) MPa. The tensile strength of the shell being limited to less than or equal to (950M+50) MPa can reduce the excessive design of the tensile strength of the shell and facilitate the selection of the material of the shell.

In some embodiments, the shell includes a shell body having an opening and an end cover for fitting on the opening.

In some embodiments, the wall thickness of the shell body is 0.05mm-2mm. The smaller the wall thickness of the shell body, the more easily the shell body is melt through during the thermal runaway of the battery cell. The larger the wall thickness of the shell body, the larger the weight of the shell body, and the lower the energy density of the battery cell. The above technical solution sets the wall thickness of the shell body to 0.05mm-2mm so as to balance the safety and the energy density of the battery cell.

In some embodiments, the shell body and the end cover are made of the same material.

In some embodiments, the shell body includes two first side plates arranged along a first direction and two second side plates arranged along a second direction, the second side plate is connected to the two first side plates, and the first direction is perpendicular to the second direction. The ratio of the size of the shell body along the second direction to the size of the shell body along the first direction is 1-50.

In some embodiments, the material of the shell includes steel or nickel. Materials such as steel and nickel have a higher melting point, which can effectively reduce the risk of the shell being melt through.

In a second aspect, embodiments of the present application provide a battery including a plurality of battery cells of any one embodiment in the first aspect.

In a third aspect, embodiments of the present application provide an electrical device including the battery cell of any embodiment in the first aspect for providing electrical energy.

### BRIEF DESCRIPTION OF THE DRAWINGS

In order to provide a clearer explanation of the technical solution of embodiments of the present application, a brief introduction will be given below to the accompanying drawings required for use in the embodiments of the present application. It is evident that the accompanying drawings are only some embodiments of the present application. For those skilled in the art, other accompanying drawings can be obtained based on the drawings without creative effort.
Fig. 1 is a structural schematic diagram of a vehicle provided in some embodiments of the present application;
Fig. 2 is an exploded schematic diagram of a battery provided in some embodiments of the present application;
Fig. 3 is a structural schematic diagram of a battery module shown in Fig. 2;
Fig. 4 is an exploded schematic diagram of a battery cell provided in some embodiments of the present application;
Fig. 5 is a sectional schematic diagram of a battery cell provided in some embodiments of the present application;
Fig. 6 is a structural schematic diagram of a positive electrode plate of a battery cell provided in some embodiments of the present application;
Fig. 7 is a structural schematic diagram of a negative electrode plate of a battery cell provided in some embodiments of the present application.

The reference signs of specific embodiments are as follows:
1. vehicle; 2. battery; 3. controller; 4. motor; 5. case; 5a. first case part; 5b. second case part; 5c. accommodation space; 6. battery module; 7. battery cell; 10. electrode assembly; 11. positive electrode plate; 111. positive electrode current collector; 112. positive electrode active substance layer; 12. negative electrode plate; 121. negative electrode current collector; 122. negative electrode active substance layer; 13. isolation member; 20. shell; 21. shell body; 211. first side plate; 212. second side plate; 22. end cover; 30. electrode terminal; D1. first direction; D2. second direction; D3.third direction.

### DETAILED DESCRIPTION

In order to make the purpose, the technical solutions, and the advantages of the embodiments of the present application clearer, the following will provide a clear and complete description for the technical solutions in the embodiments of the present application in conjunction with the accompanying drawings. Obviously, the described embodiments are a part of the embodiments of the present application, but not all the embodiments. Based on the embodiments of the present application, all the other embodiments obtained by the skilled person in the art without creative effort fall within the scope of the protection of the present application.

Unless otherwise defined, all technical and scientific terms used in the text have the same meanings as those commonly understood by the skilled person in the technical field which the present application belongs to. The terms used in the specification of the application in the text are only for the purpose of describing specific embodiments and are not intended to limit the present application. The terms "including" and "having" in the description, the claims, the description of the above accompanying drawings of the present application, and any variations thereof, are intended to cover non-exclusive inclusion. The terms "first", "second", etc. in the description, the claims, or the above accompanying drawings of the present application are for distinguishing different objects, rather than to describe the specific order or the primary and secondary relationship.

In the description of the embodiments of the present application, an orientation or positional relationship indicated by the technical terms "center", "transverse", "length", "width", "upper", "lower", "front", "back", "left", "right", "vertical", "horizontal", "top", "bottom", "internal", "external", "axial direction", "radial direction", "circumferential direction", or the like is based on an orientation or positional relationship shown in the accompanying drawings, and is merely for the convenience of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the present application, it should be noted that unless otherwise specified and limited, the terms "installation", "connected with", "connection", "attachment" should be broadly understood. For example, the "connection" may be fixed connection, detachable connection, integrated connection, direct connection, indirect connection via an intermediate medium, or internal communication between two elements. The skilled person in the art may appreciate the specific meanings of the foregoing terms in the present application according to specific circumstances.

Reference to "embodiment" in the text means that specific features, structures, or characteristics described in conjunction with the embodiments may be included in at least one embodiment of the present application. The phrase appearing in various positions in the specification does not necessarily refer to the same embodiment, nor is it an independent or alternative embodiment that is mutually exclusive with other embodiments. The person skilled in the art could understand explicitly or implicitly that the embodiments described in the context of the present application may be combined with other embodiments.

In the text, the term "and/or" is only a description of the association relationship of the associated object, indicating that there can be three types of relationships, such as A and/or B which can indicate the presence of A alone, the presence of A and B simultaneously, and the presence of B alone. In addition, the character "/" in the text generally indicates that the objects associated before and after are an "or" relationship.

The terms "multiple", "a plurality of" appearing in the present application refers to two or more (including two).

In the embodiments of the present application, "parallel" includes not only absolute parallel situations, but also roughly parallel situations commonly recognized in engineering. At the same time, "vertical" also includes not only absolute vertical situations, but also general vertical situations recognized in engineering. For example, if the angle between the two directions is 80 °-90 °, it can be considered that the two directions are perpendicular to each other. If the angle between the two directions is 0° -10° , it can be considered that the two directions are parallel.

In the present application, the battery cell can be cylindrical, flat, cuboid, or other shapes, etc., which are not limited by the embodiments of the present application.

The battery referred to in the embodiments of the present application refers to a single physical module including one or more battery cells to provide higher voltage and capacity. For example, the battery mentioned in the present application may include a battery module or a battery pack, etc. A battery generally includes a case for encapsulating one or more battery cells. The case can prevent liquids or other foreign objects from affecting the charging or discharging of the battery cell.

The battery cell includes an electrode assembly and an electrolyte, and the electrode assembly includes a positive electrode plate, a negative electrode plate, and an isolation member. The battery cell mainly relies on the movement of metal ions between the positive electrode plate and the negative electrode plate for operation. The positive electrode plate includes a positive electrode current collector and a positive electrode active substance layer. The positive electrode active substance layer is applied on the surface of the positive electrode current collector. The positive electrode current collector includes a positive electrode current collecting part and a positive electrode tab. The positive electrode current collecting part is coated with the positive electrode active substance layer and the positive electrode tab is not coated with the positive electrode active substance layer. Taking the lithium-ion battery as an example, the material of the positive electrode current collector can be aluminum, and the positive electrode active substance can be lithium cobalt oxide, lithium iron phosphate, ternary lithium, or lithium manganese oxide. The negative electrode plate includes a negative electrode current collector and a negative electrode active substance layer. The negative electrode active substance layer is applied on the surface of the negative electrode current collector. The negative electrode current collector includes a negative electrode current collecting part and a negative electrode tab. The negative electrode current collecting part is coated with the negative electrode active substance layer and the negative electrode tab is not coated with the negative electrode active substance layer. The material of the negative electrode current collector can be copper. The negative electrode active substance layer includes a negative electrode active substance. The negative electrode active material can be carbon or silicon, etc. The material of the isolation member can be PP (polypropylene) or PE (polyethylene), etc.

The battery cell further includes a shell, and an accommodation space for accommodating the electrode assembly and the electrolyte is formed inside the shell. The shell can protect the electrode assembly from the outside so as to reduce the risk of the failure of the electrode assembly.

The development of battery technology should simultaneously consider multiple design factors, such as energy density, cycle life, discharge capacity, charge and discharge rate, and other performance parameters. In order to improve the reversible capacity and low-temperature stability of the battery cell, ternary lithium material is used as the positive electrode active material of the positive electrode plate. For example, the positive electrode active material includes lithium nickel cobalt manganese oxide.

In the development of battery technology, the safety of the battery needs to be considered further.

In a battery, multiple battery cells are used in groups. When a certain battery cell experiences thermal runaway due to unexpected circumstances (such as collision, short circuit, or other situations), the electrode assembly rapidly generates heat and produces high-temperature and high-pressure substances. The battery cell is usually provided with a pressure relief mechanism, which can break down when the pressure or the temperature inside the battery cell reaches a threshold, thus forming a channel for the discharging of the high-temperature and high-pressure substances. The pressure relief mechanism can release the pressure of the battery cell under controllable pressure or temperature, thereby avoiding potential more serious accidents.

However, the inventors noticed that the high-temperature and high-pressure substances released by the electrode assembly would act on the shell. If the shell is melted, the high-temperature and high-pressure substances may be discharged through the opening formed by the melting of the shell. The high-temperature and high-pressure substances discharged through the opening formed by the melting of the shell will act on other normal battery cells, which can cause thermal runaway of other battery cells and cause safety accidents.

The inventors have found through a lot of research that the heat generation of the electrode assembly during thermal runaway is related to the nickel element content in the lithium nickel cobalt manganese oxide of the positive electrode active material. The higher the nickel element content, the higher the rate of gas generation by the electrode assembly and the more the heat generated by the electrode assembly during thermal runaway, and the higher the risk of the melting of the shell.

In view of this, the inventors proposed a battery cell, which selects the shell based on the nickel element content in the positive electrode active material to reduce the risk of the melting of the shell during the thermal runaway of the battery cell and improve the safety. Specifically, the battery cell includes a shell and a positive electrode plate. The melting point of the shell is N. The positive electrode plate is accommodated within the shell and includes a positive electrode active material, which includes lithium nickel cobalt manganese oxide. The weight of the nickel element in the lithium nickel cobalt manganese oxide is G1, and the sum of the weights of a nickel element, a cobalt element, and a manganese element is G2. The value of G1/G2 is M. M and N meet: 0.1 ≤M≤0.65, N≥(50M+500)°C; or M and N meet: 0.65 <M< 1, N≥(950M+500)°C.

The battery cell described in the embodiments of the present application is applicable to a battery and an electrical device using the battery cell.

Electrical devices can be vehicles, mobile phones, portable devices, laptops, ships, spacecraft, electric toys, and electric tools, etc. The vehicle can be a fuel powered vehicle, a gas powered vehicle, or a new energy vehicle. The new energy vehicle can be a pure electric vehicle, a hybrid electric vehicle, or an extended range vehicle, etc. Spacecraft include airplanes, rockets, space shuttles, and spaceship, etc. Electric toys include fixed or mobile electric toys, such as game consoles, electric car toys, electric boat toys, and electric airplane toys. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of the present application do not impose special restrictions on the above-mentioned electrical devices.

For the convenience of explanation, the following embodiments will take the electrical device being a vehicle as an example.

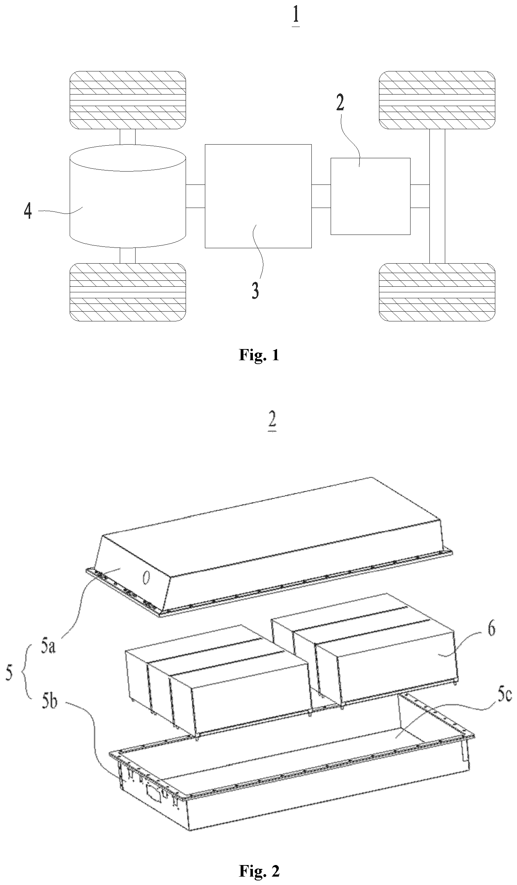

Fig. 1 is a structural schematic diagram of a vehicle provided in some embodiments of the present application.

As shown in Fig. 1, the interior of the vehicle 1 is provided with a battery 2, which can be installed in the bottom, front, or back of the vehicle 1. The battery 2 can be used for power supply to the vehicle 1. For example, the battery 2 can serve as the operating power source for the vehicle 1.

The vehicle 1 may further include a controller 3 and a motor 4. The controller 3 is configured to control the battery 2 to supply power to the motor 4, for example, to meet the operational power requirements for starting, navigation, and driving of the vehicle 1.

In some embodiments of the present application, the battery 2 can not only serve as the operating power source for the vehicle 1, but also as the driving power source for the vehicle 1, replacing or partially replacing fuel or natural gas to provide driving power for the vehicle 1.

Fig. 2 is an exploded schematic diagram of a battery provided in some embodiments of the present application.

As shown in Fig. 2, the battery 2 includes a case 5 and a battery cell (not shown), and the battery cell is accommodated inside the case 5.

The case 5 is configured to accommodate the battery cell, and can be of various structures. In some embodiments, the case 5 may include a first case part 5a and a second case part 5b. The first case part 5a and the second case part 5b cover each other, and the first case part 5a and the second case part 5b jointly define an accommodation space 5c for accommodating the battery cell. The second case part 5b can be a hollow structure with one end open, the first case part 5a is a plate-like structure, and the first case part 5a fits on the opening side of the second case part 5b to form a case 5 with an accommodation space 5c. The first case part 5a and the second case 5b can also be a hollow structure with one side opening. The opening side of the first case part 5a fits on the opening side of the second case part 5b to form a case 5 with an accommodation space 5c. Of course, the first case part 5a and the second case part 5b can have various shapes, such as cylinder and cuboid.

In order to improve the sealing performance of the first case part 5a and the second case part 5b after being connected, a sealing element such as a sealant and a sealing ring can further be installed between the first case part 5a and the second case part 5b.

Assuming that the first case part 5a fits on the top of the second case part Sb, the first case part 5a can also be referred to as the upper case cover, and the second case part 5b can also be referred to as the lower case.

In the battery 2, the battery cell can be one or multiple. If multiple battery cells are provided, they can be connected in series, parallel, or hybrid. Hybrid connection refers to the presence of both series and parallel connections among the plurality of battery cells. The multiple cells can be directly connected in series, parallel, or hybrid together, and then the whole composed of the plurality of battery cells can be accommodated in the case 5. Of course, multiple battery cells can also be connected in series, parallel, or hybrid to form a battery module 6. Multiple battery modules 6 can then be connected in series, parallel, or hybrid to form a whole and accommodated in the case 5.

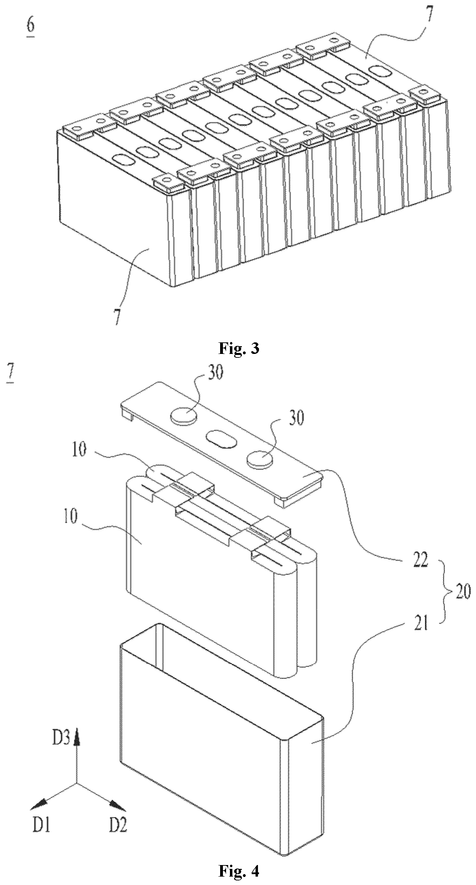

Fig. 3 is a structural schematic diagram of the battery module shown in Fig. 2.

In some embodiments, as shown in Fig. 3, a plurality of battery cells 7 are provided, and the plurality of battery cells 7 are first connected in series, parallel, or hybrid to form a battery module 6. A plurality of battery modules 6 are connected in series, parallel, or hybrid to form a whole and accommodated inside the case.

The plurality of battery cells 7 in the battery module 6 can be electrically connected through a busbar to achieve parallel, series, or hybrid connection of the plurality of battery cells 7 in the battery module 6.

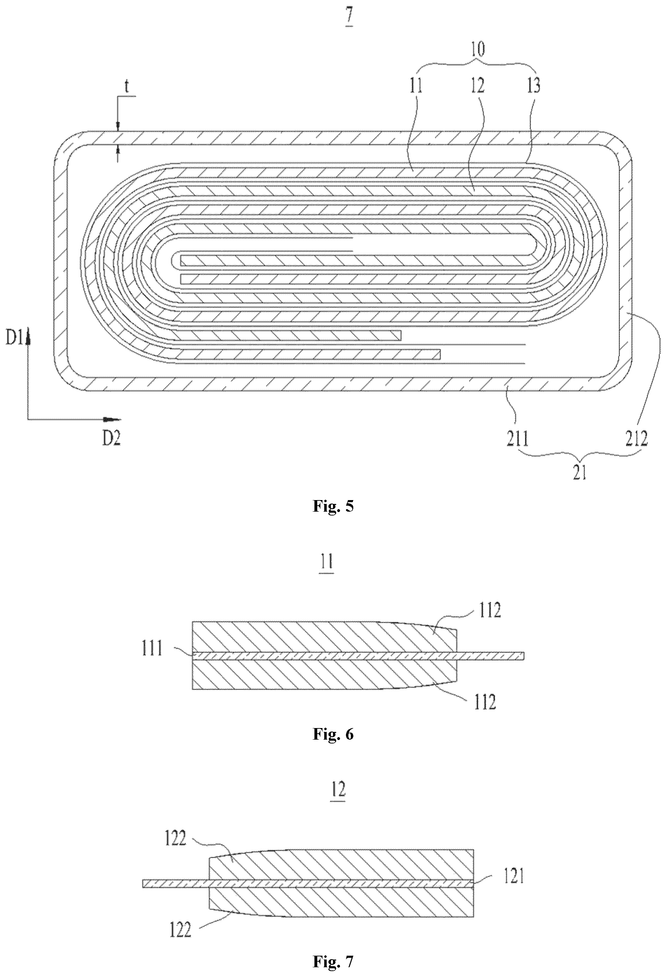

Fig. 4 is an exploded schematic diagram of a battery cell provided in some embodiments of the present application. Fig. 5 is a sectional schematic diagram of a battery cell provided in some embodiments of the present application. Fig. 6 is a structural schematic diagram of a positive electrode plate of a battery cell provided in some embodiments of the present application. Fig. 7 is a structural schematic diagram of a negative electrode plate of a battery cell provided in some embodiments of the present application.

As shown in Figs. 4 to 7, the embodiments of the present application provide a battery cell 7 including a shell 20 and a positive electrode plate 11. The melting point of the shell 20 is N. The positive electrode plate 11 is accommodated inside the shell 20 and includes a positive electrode active material, which includes lithium nickel cobalt manganese oxide. The weight of a nickel element in the lithium nickel cobalt manganese oxide is G1, and the sum of the weights of a nickel element, a cobalt element, and a manganese element is G2. The value of G1/G2 is M. M and N meet: 0.1≤M≤0.65, N≥(50M+500)°C; or M and N meet: 0.65<M<1, N ≥ (950M+500)°C.

For example, the battery cell 7 includes an electrode assembly 10, which includes a positive electrode plate 11 and a negative electrode plate 12. The electrode assembly 10 generates electrical energy through the oxidation and reduction reactions of lithium ions during insertion/extraction in the positive electrode 11 and the negative electrode 12.

The shell 20 is a hollow structure, and an accommodation chamber for accommodating the electrode assembly 10 and the electrolyte is formed inside the shell 20. The shape of the shell 20 can be determined based on the specific shape of the electrode assembly 10. For example, if the electrode assembly 10 is a cuboid structure, a cuboid shell can be selected. If the electrode assembly 10 is a cylindrical structure, a cylindrical shell can be selected.

The lithium nickel cobalt manganese oxide includes a lithium element, a nickel element, a cobalt element, a manganese element, and an oxygen element. The lithium nickel cobalt manganese oxide may include only the aforementioned five elements, or may further include other elements.

For example, the molecular formula of the lithium nickel cobalt manganese oxide is LiₓNiₐCo_{b}Mn_{c}Z_{d}O_{2-y}A_{y}, where Z represents transition metal site doped cation and A represents oxygen site doped anion. In LiₓNiₐCo_{b}Mn_{c}Z_{d}O_{2-y}A_{y}, 0.8≤x≤1.2, 0<a<1, 0<b<1, 0<c<1, 0≤d ≤0.2, a+b+c+d=1, 0≤y≤0.2.

Z includes at least one of Al, Si, Mg, Ti, V, Cr, Fe, Cu, Zn, Mo, Ge, Se, Zr, Nb, Ru, Pd, Sb, Ce, Te, and W elements. A includes at least one of F, N, P, and S elements.

For example, the lithium nickel cobalt manganese oxide can be LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCMsn), LiNi_{0.85}Co_{0.15}Mn_{0.05}O₂.

M is used to characterize the content of the nickel element. For example, in LiₓNiₐCo_{b}Mn_{c}P_{d}O_{2-y}A_{y}, M can be adjusted by adjusting the values of a, b, and c.

The higher the value of M, the higher the rate of gas generation by the electrode assembly 10 and the more the heat generated by the electrode assembly 10 during thermal runaway, and the higher the melting point required for the shell 20. On the contrary, the smaller the value of M, the less the heat generated by the battery cell 7 during thermal runaway is less, and the lower the melting point required for the shell 20. The inventors of the present application have found through research that for the battery cell 7 that meets 0.1≤M≤0.65, the melting point of the shell 20 should be at least greater than or equal to (50M+500)°C so as to reduce the risk of the shell 20 being melted through during thermal runaway of the battery cell 7. For the battery cell 7 that meets 0.65 <M<1, the melting point of the shell 20 of the battery cell 7 should be at least greater than or equal to (950M+500)°C so as to reduce the risk of the shell 20 being melted through during the thermal runaway of the battery cell 7.

In some embodiments, the positive electrode active material can be detected for the element content using inductively coupled plasma emission spectroscopy (ICP).

In some embodiments, M and N meet: 0.1≤M≤0.65, N≥(200M+500)°C.

In some embodiments, M and N meet: 0.1 & M & 0.65, (50M+500) °C & N & (15000M+500)°C.

When the shell 20 is selected, in addition to considering the melting point of the shell 20, other factors need to be considered, such as the strength of the shell 20 and the cost of the shell 20. The inventors found through research that the melting point of the shell 20 being limited to less than or equal to (15000M+500)°C can reduce the excessive design of the melting point of the shell 20 and facilitate the selection of the material of the shell 20.

In some embodiments, for the battery cell 7 with M ranging from 0.1 to 0.65, the melting point N of the shell 20 can be (50M+500)°C, (100M+500)°C, (200M+500)°C, (500M+500)°C, (1000M+500)°C, (2000M+500)°C, (5000M+500)°C, (10000M+500)°C, or (15000M+500)°C.

In some embodiments, M and N meet: 0.65<M<1, N^(1000M+500)°C.

In some embodiments, M and N meet: 0.65<M<1, N≤(3000M+500)°C.

When the shell 20 is selected, in addition to considering the melting point of the shell 20, other factors need to be considered, such as the strength of the shell 20 and the cost of the shell 20. The inventors found through research that the melting point of the shell 20 being limited to less than or equal to (3000M+500)°C can reduce the excessive design of the melting point of the shell 20 and facilitate the selection of the material of the shell 20.

In some embodiments, M and N meet: N≤(1800M+500)°C.

In some embodiments, M and N meet: 0.1 ≤M≤0.65, 600°C ≤N≤1800°C. Optionally, N ranges from 600°C to 800°C.

In some embodiments, M and N meet: 0.65<M<1, 800°C <,N<, 1800°C. Optionally, N ranges from 1400°C to 1600°C.

In some embodiments, the battery cell 7 further includes a negative electrode plate 12 accommodated within the shell 20. The negative electrode plate 12 includes a negative electrode active material, which includes graphite and a silicon containing material. The weight of the silicon containing material is B1, the weight of the graphite is B2, and the value of B1/(B1+B2) is P. P meets: 0<P<0.6.

Compared to the graphite, the silicon containing material has a higher specific capacity. The present embodiment effectively improves the energy density of the battery cell 7 by replacing some graphite with the silicon containing material. However, the expansion of the silicon containing material during charging is large. If the content of the silicon containing material is too high, it will lead to excessive expansion force of the battery cell 7 during charging, affecting the safety and the cycle life of the battery cell 7. The inventors limited the value of P to be greater than 0 but less than 0.6 so as to balance the energy density and the expansion force of the battery cell 7.

In some embodiments, the silicon containing material includes at least one of silicon oxide, pure silicon, and carbon silicon.

In some embodiments, the tensile strength of the shell 20 is Q, and Q and M meet: 0.1 ≤M≤0.65, Q≥(50M+50) MPa.

The tensile strength is the critical value at which a material transitions from uniform plastic deformation to localized concentrated plastic deformation, and is also the maximum load-bearing capacity of the material under static tensile conditions. For the plastic material, the tensile strength characterizes the resistance of the material to the maximum uniform plastic deformation. Before bearing the maximum tensile stress, the material undergoes uniform deformation, but after exceeding this limit, the material begins to exhibit necking, resulting in concentrated deformation. For the brittle material without uniform plastic deformation or with very small uniform plastic deformation, the tensile strength reflects the fracture resistance of the material.

The tensile strength of the shell 20 can be tested according to the following steps: taking a section of the sample on the shell 20 and measuring the cross-sectional area So of the sample; installing the sample onto the tensile testing machine, which stretches the sample and records the tensile value in real time; after the sample is pulled apart, obtaining the maximum load Fb that the sample bears before being pulled apart. The tensile strength of the shell 20 is F_{b}/Sₒ.

The higher the value of M, the higher the rate of gas generation by the electrode assembly 10 and the larger the amount of the gas produced by the electrode assembly 10 during thermal runaway. The gas will increase the internal pressure of the shell 20, causing the shell to stretch under the action of internal pressure, further making the shell 20 more prone to cracking under the action of high-temperature and high-pressure substances.

The inventors of the present application have found through research that for the battery cell 7 that meets 0.1 ≤M≤0.65, the tensile strength of the shell 20 should be at least greater than or equal to (50M+50) MPa, so as to reduce the stretching amount of the shell 20 during the thermal runaway of the battery cell 7, reduce the risk of the cracking of the shell 20 and improve the safety.

In some embodiments, Q and M meet: 0.1≤M≤0.65, Q≤(1100M+50)MPa. Optionally, Q is (50M+50)MPa, (100M+50) MPa, (200M+50) MPa, (500M+50) MPa, (800M+50) MPa, (1000M+50) MPa, or (1100M+50) MPa.

When the shell 20 is selected, it is necessary to comprehensively consider factors such as the melting point, the tensile strength, and the cost of the shell 20. After research, the inventors found that the tensile strength of the shell 20 being limited to less than or equal to (1100M+50) MPa can reduce the excessive margin of the tensile strength of the shell 20, which is convenient for the selection of the material of the shell 20.

In some embodiments, the tensile strength of the shell 20 is Q, and Q and M meet: 0.65 <M<1, Q≥(300M+50) MPa.

The inventors of the present application have found through research that for the battery cell 7 that meets 0.65 <M< 1, the tensile strength of the shell 20 should be at least greater than or equal to (300M+50)MPa, so as to reduce the stretching amount of the shell 20 during the thermal runaway of the battery cell 7, reduce the risk of the cracking of the shell 20, and improve the safety.

In some embodiments, the tensile strength of the shell 20 is Q, and Q and M meet: 0.65 <M< 1, Q≤(950M+50) MPa. Optionally, Q is (300M+50) MPa, (400M+50) MPa, (500M+50) MPa, (700M+50) MPa, (900M+50) MPa, or (950M+50) MPa.

When the shell 20 is selected, it is necessary to comprehensively consider factors such as the melting point, the tensile strength, and the cost of the shell 20. After research, the inventors found that the tensile strength of the shell 20 being limited to less than or equal to (950M+50) MPa can reduce the excessive margin of the tensile strength of the shell 20, which is convenient for the selection of the material of the shell 20.

In some embodiments, the material of the shell 20 may be metal.

In some embodiments, the material of the shell 20 may be copper, iron, aluminum, nickel, stainless steel, aluminum alloy, copper alloy, magnesium aluminum alloy, zinc alloy, nickel alloy, or other materials.

In some embodiments, the shell 20 includes a shell body 21 having an opening and an end cover 22 for fitting on the opening.

The end cover 22 is sealedly connected to the shell body 21 to form a sealing space for accommodating the electrode assembly 10 and the electrolyte. In some examples, one end of the shell body 21 has an opening, and one end cover 22 is provided to fit on the opening of the shell body 21. In other some examples, the opposite two ends of the shell body 21 have openings, and two end covers 22 are provided to fit on the two openings of the shell body 21 respectively.

Without limitation, the shape of the end cover 22 can be adapted to the shape of the shell body 21 to engage with the shell body 21. Optionally, the end cover 22 can be made of materials with certain hardness and strength (such as aluminum alloy), so that it is less prone to deformation when subjected to compression and collision, allowing the battery cell 7 to have higher structural strength and improved safety performance.

The shell bogy 21 can be of various shapes and sizes, such as cuboid, cylindrical and hexagonal. Specifically, the shape of the shell body 21 can be determined based on the specific shape and the size of the electrode assembly 10. The material of the shell body 21 can be various, such as copper, iron, aluminum, stainless steel and aluminum alloy, which are not limited specially by the embodiments of the present application.

The shell body 21 and the end cover 22 can be made of the same material or different materials. For example, if the shell body 21 and the end cover 22 use different materials, the melting point of the shell body 21 and the melting point of the end cover 22 both meet the aforementioned relationship.

In some embodiments, functional components such as electrode terminals 30 may be provided on the end cover 22. The electrode terminal 30 can be used for electrical connection with the electrode assembly 10 to output or input the electrical energy of the battery cell 7.

In some embodiments, the electrode assembly 10 includes a positive electrode plate 11, a negative electrode plate 12 and an isolation member 13 for separating the positive electrode plate 11 from the negative electrode plate 12. The electrode assembly 10 can be a wound type of structure, a laminated type of structure, or other structure.

In some embodiments, the positive electrode plate 11 includes a positive electrode current collector 111 and a positive electrode active substance layer 112 applied on the surface of the positive electrode current collector 111. The positive electrode active material layer 112 includes a positive electrode active material. Optionally, the positive electrode active substance layer 112 further includes a conductive agent and an adhesive.

In some embodiments, the negative electrode plate 12 includes a negative electrode current collector 121 and a negative electrode active substance layer 122 applied on the surface of the negative electrode current collector 121, and the negative active substance layer 122 includes a negative active material. The negative active substance layer 122 further includes a conductive agent and an adhesive.

In some embodiments, the wall thickness t of the shell body 21 is 0.05mm-2mm.

The smaller the wall thickness of the shell body 21, the more easily the shell body 21 is melt through during the thermal runaway of the battery cell 7. The larger the wall thickness of the shell body 21, the larger the weight of shell body 21 and the lower the energy density of the battery cell 7. The inventors, through calculation and experimentation, set the wall thickness of the shell body 21 to 0.05mm-2mm so as to balance the safety and the energy density of the battery cell 7.

Optionally, the wall thickness of the shell body 21 is 0.05mm, 0.1mm, 0.2mm, 0.5mm, 0.8mm, 1mm, 1.2mm, 1.5mm or 2mm.

In some embodiments, the thickness of the end cover 22 is greater than the wall thickness of the shell body 21.

In some embodiments, the shell body 21 and the end cover 22 are made of the same material. The shell body 21 and end cover 22 of the same material are more easily connected by welding.

In some embodiments, the shell body 21 includes two first side plates 211 arranged along the first direction D1 and two second side plates 212 arranged along the second direction D2, wherein the second side plate 212 is connected to the two first side plates 211, and the first direction D1 is perpendicular to the second direction D2. The ratio θ between the size of the shell body 21 along the second direction D2 and the size of the shell body 21 along the first direction D1 is 1-50.

The inventors limited the value of θ to 1-50 so as to facilitate the arrangement of a plurality of battery cells 7.

In some embodiments, the area of the first side plate 211 is larger than the area of the second side plate 212.

In some embodiments, the size of the shell body 21 along the third direction D3 is 10mm to 200mm, and the third direction D3 is perpendicular to the first direction D1 and the second direction D2.

In some embodiments, the material of the shell 20 includes steel or nickel. The melting point of materials such as steel and nickel exceeds 1400°C, which can effectively reduce the risk of the shell 20 being melted through.

Optionally, the shell body 21 is made of SPCC (usually cold-rolled carbon steel sheets and strips), 304 stainless steel, or pure nickel.

According to some embodiments of the present application, the present application further provides a battery including a plurality of battery cells of any one of the above embodiments.

According to some embodiments of the present application, the present application further provides an electrical device, including a battery cell of any of the above embodiments for providing electrical energy to the electrical device. The electrical device can be any of the aforementioned devices or systems that use the battery cell.

According to some embodiments of the present application, referring to Figs. 4 to 7, the present application provides a battery cell 7 including a shell 20 and an electrode assembly 10 accommodated in the shell 20, wherein the electrode assembly 10 includes a positive electrode plate 11 and a negative electrode plate 12. The melting point of the shell 20 is N, and the tensile strength of the shell 20 is Q. The positive electrode plate 11 includes a positive electrode active material, which includes lithium nickel cobalt manganese oxide. The weight of a nickel element in the lithium nickel cobalt manganese oxide is G1, and the sum of the weights of a nickel element, a cobalt element, and a manganese element is G2. The value of G1/G2 is M. The negative electrode plate 12 includes a negative electrode active material, which includes graphite and a silicon containing material. The weight of the silicon containing material is B1, the weight of the graphite is B2, and the value of B1/(B1+B2) is P. P meets: 0<P<0.6.

In some examples, M, N, and Q meet: 0.1 & M & 0.65, (50M+500) °C & N & (15000M+500)°C, (50M+50) MPa≤Q≤(1100M+50). In other some examples, M, N, and Q meet: 0.65<M<1, (950M+500)°C≤N≤(3000M+500)°C, (300M+50)MPa≤Q≤(950M+50) MPa.

The following further illustrates the present application in conjunction with embodiments.

In order to make the invention purpose, technical solution, and beneficial technical effects of the present application clearer, the following will further describe the present application in detail in conjunction with embodiments. However, it should be understood that the embodiments of the present application are only for the purpose of explaining the present application and not to limit it, and the embodiments of the present application are not limited to the embodiments provided in the specification. If specific experimental or operational conditions are not specified in the implementation example, they shall be made according to conventional conditions or conditions recommended by the material supplier.

Embodiment 1 can be prepared according to the following steps:
(i) A positive electrode slurry is obtained by mixing the positive electrode active substance LiNiₐCo_{b}Mn_{c}O₂, conductive agent acetylene black, and binder PVDF in a mass ratio of 96:2:2, adding solvent NMP, and stirring them under the action of a vacuum mixer until the system is uniform; the positive electrode plate is obtained by uniformly applying the positive electrode slurry on the aluminum foil, drying at room temperature, transferring to an oven for continuous drying, and then cold pressing, slitting, and cutting.
(ii) A negative electrode slurry is obtained by mixing the negative electrode active material graphite, conductive agent acetylene black, thickener CMC, and binder SBR in a mass ratio of 96.4:1:1.2:1.4, adding deionized water as a solvent and stirring them under a vacuum mixer until the system is uniform; a negative electrode plate is obtained by uniformly applying the negative electrode slurry on the copper foil, drying at room temperature, transferring to an oven for continuous drying, and then cold pressing, cutting, and cutting.
(iii) An organic solvent is obtained by mixing ethylene carbonate (EC), methyl ethyl carbonate (EMC), and diethyl carbonate (DEC) in a volume ratio of 1:1:1. Then, an electrolyte with a concentration of 1mol/L is prepared by dissolving the fully dried lithium salt LiPF6 in the mixed organic solvent.
(iv) The polypropylene film of 7 µm thickness is taken as an isolation member.
(v) The positive electrode plate, the isolation member, and the negative electrode plate are stacked together and wound into a plurality of coils, then are flattened into a flat shape to prepare the electrode assembly.
(vi) the electrode assembly and the heating sheet are installed into the square shell body, and the shell body and the end cover are welded; then, through processes such as liquid injection, settling, formation, and shaping, the battery cell is obtained. The heating sheet is attached to the electrode assembly, and the wire of the heating sheet come out from the end cover.

In step (i), a+b+c=1. When the positive electrode active material is prepared, the weight of the nickel element can be changed by adjusting the molar ratio of nickel atoms, cobalt atoms, and manganese atoms. The weight of the nickel element is G1, the sum of the weights of the nickel element, the cobalt element, and the manganese element is G2, the weight of cobalt atoms is G3, and the weight of the manganese element is G4. In Embodiment 1, M=G1/G2=0.5, G3/G2=0.2, G4/G2=0.3.

In step (vi), the shell body and the end cover are both made of aluminum alloy, and the melting point N of the shell body is 660 °C .

### Embodiment 2:

The preparation method of the battery cell in Embodiment 2 is similar to Embodiment 1, with the difference being that M=G1/G2=0.6, G3/G2=0.2, G4/G2=0.2.

### Embodiment 3:

The preparation method of the battery cell in Embodiment 3 is similar to Embodiment 1, with the difference being that M=G1/G2=0.65, G3/G2=0.15, G4/G2=0.2.

### Embodiment 4:

The preparation method of the battery cell in Embodiment 4 is similar to Embodiment 1, with the difference being that M=G1/G2=0.1, G3/G2=0.5, G4/G2=0.4.

### Embodiment 5:

The preparation method of the battery cell in Embodiment 5 is similar to Embodiment 1, with the difference being that M=G1/G2=0.3, G3/G2=0.4, G4/G2=0.3.

### Embodiment 6:

The preparation method of the battery cell in Embodiment 6 is similar to Embodiment 1, with the difference being that the shell body and the end cover are both made of copper zinc alloy, and the melting point N of the shell body is 550°C.

### Embodiment 7:

The preparation method of the battery cell in Embodiment 7 is similar to Embodiment 1, with the difference being that M=G1/G2=0.7, G3/G2=0.15, G4/G2=0.15, that the shell body and the end cover are both made of steel, and that the melting point N of the shell body is 1500 °C.

### Embodiment 8:

The preparation method of the battery cell in Embodiment 8 is similar to Embodiment 7, with the difference being that M=G1/G2=0.8, G3/G2=0.1, G4/G2=0.1.

### Embodiment 9:

The preparation method of the battery cell in Embodiment 9 is similar to Embodiment 7, with the difference being that M=G1/G2=0.9, G3/G2=0.05, G4/G2=0.05.

### Embodiment 10:

The preparation method of the battery cell in Embodiment 10 is similar to Embodiment 7, with the difference being that M=G1/G2=0.96, G3/G2=0.02, G4/G2=0.02.

### Embodiment 11:

The preparation method of the battery cell in Embodiment 11 is similar to Embodiment 8, with the difference being that the shell body and the end cover are both made of copper nickel alloy, and the melting point N of the shell body is 1300°C.

### Embodiment 12:

The preparation method of the battery cell in Embodiment 12 is similar to Embodiment 7, with the difference being that the shell body and the end cover are both made of copper nickel alloy, and the melting point N of the shell body is 1200°C.

### Comparative example 1:

The preparation method of the battery cell in Comparative example 1 is similar to Embodiment 1, with the difference being that M=G1/G2=0.6, G3/G2=0.2, G4/G2=0.2, that the shell body and the end cover are both made of zinc alloy, and that the melting point N of the shell body is 420°C.

### Comparative example 2:

The preparation method of the battery cell in Comparative example 2 is similar to Embodiment 1, with the difference being that M=G1/G2=0.1, G3/G2=0.5, G4/G2=0.4, that the shell body and the end cover are both made of zinc alloy, and that the melting point N of the shell body is 420°C.

### Comparative example 3:

The preparation method of the battery cell in Comparative example 3 is similar to Embodiment 1, with the difference being that M=G1/G2=0.7, G3/G2=0.15, G4/G2=0.15, that the shell body and the end cover are both made of zinc alloy, and that the melting point N of the shell body is 420°C.

### Comparative example 4:

The preparation method of the battery cell in Comparative example 4 is similar to Embodiment 1, with the difference being that M=G1/G2=0.66, G3/G2=0.22, G4/G2=0.22.

### Comparative example 5:

The preparation method of the battery cell in Comparative Example 5 is similar to Embodiment 1, with the difference being that M=G1/G2=0.7, G3/G2=0.15, G4/G2=0.15, that the shell body and the end cover are both made of copper alloy, and that the melting point N of the shell body is 1083°C.

### Comparative example 6:

The preparation method of the battery cell in Comparative example 6 is similar to Embodiment 1, with the difference being that M=G1/G2=0.9, G3/G2=0.05, G4/G2=0.05, that the shell body and the end cover are both made of copper nickel alloy, and that the melting point N of the shell body is 1300°C.

Embodiments 1-12 and Comparative example 1-6 are used to prepare 100 battery cells, and the thermal runaway test is conducted on each battery cell.

Specifically, the battery cell is placed in a sealed box, and an external power source is used to power the heating sheet inside the battery cell. The heating sheet heats the electrode assembly to cause the thermal runaway of the electrode assembly. After the thermal runaway of the electrode assembly, whether the shell body of the battery cell melts or cracks is observed. If the shell body undergoes melting, cracking, etc., it is determined that the shell body fails. The number of the failure of the shell body divided by the total number of the battery cell is the failure rate of the shell body.

The evaluation results of Embodiments 1-12 and Comparative Examples 1-6 are shown in Table 1.

**Table 1**

| | nickel content M | cobalt content G3/G2 | mangan ese content G4/G2 | melting point N (°C) | 50M+5 00 (°C) | 950M+5 00 (°C) | failure rate of shell body |
|---|---|---|---|---|---|---|---|
| Embodiment 1 | 0.5 | 0.2 | 0.3 | 660 | 525 | \ | 0% |
| Embodiment 2 | 0.6 | 0.2 | 0.2 | 660 | 530 | \ | 0% |
| Embodiment 3 | 0.65 | 0.15 | 0.2 | 660 | 532.5 | \ | 0% |
| Embodiment 4 | 0.1 | 0.5 | 0.4 | 660 | 505 | \ | 0% |
| Embodiment 5 | 0.3 | 0.4 | 0.3 | 660 | 515 | \ | 0% |
| Embodiment 6 | 0.5 | 0.2 | 0.3 | 550 | 525 | \ | 0% |
| Embodiment 7 | 0.7 | 0.15 | 0.15 | 1500 | \ | 1165 | 0% |
| Embodiment 8 | 0.8 | 0.1 | 0.1 | 1500 | \ | 1260 | 0% |
| Embodiment 9 | 0.9 | 0.05 | 0.05 | 1500 | \ | 1355 | 0% |
| Embodiment 10 | 0.96 | 0.02 | 0.02 | 1500 | \ | 1412 | 0% |
| Embodiment 11 | 0.8 | 0.1 | 0.1 | 1300 | \ | 1260 | 0% |
| Embodiment 12 | 0.7 | 0.15 | 0.15 | 1200 | \ | 1165 | 0% |
| Comparative example 1 | 0.6 | 0.2 | 0.2 | 420 | 530 | \ | 70% |
| Comparative example 2 | 0.1 | 0.5 | 0.4 | 420 | 505 | \ | 51% |
| Comparative example 3 | 0.7 | 0.15 | 0.15 | 420 | \ | 1165 | 100% |
| Comparative example 4 | 0.66 | 0.22 | 0.22 | 660 | \ | 1127 | 19% |
| Comparative example 5 | 0.7 | 0.15 | 0.15 | 1083 | \ | 1165 | 10% |
| Comparative example 6 | 0.9 | 0.05 | 0.05 | 1300 | \ | 1355 | 9% |

Referring to Embodiments 1-12 and Comparative examples 1-6, the embodiments of the present application select the shell based on the nickel element content in the positive electrode active material, so as to reduce the risk of the melting of the shell during the thermal runaway of the battery cell and improve the safety.

It should be noted that, without conflict, the embodiments and features in the embodiments of the present application can be combined with each other.

Finally, it should be noted that the above embodiments are only used to illustrate the technical solution of the present application, and not to limit it. Although the present application has been described in detail with reference to the aforementioned embodiments, the skilled person in the art should understand that they can still modify the technical solutions recorded in the aforementioned embodiments, or equivalently replace some of the technical features, but these modifications or replacements do not make the essence of the corresponding technical solutions deviate from the spirit and scope of the technical solutions in the various embodiments of the present application.

## Claims

1. A battery cell, comprising:
a shell with a melting point of N; and
a positive electrode plate accommodated within the shell and comprising a positive electrode active material, wherein the positive electrode active material comprises lithium nickel cobalt manganese oxide, a weight of a nickel element in the lithium nickel cobalt manganese oxide is G1, a sum of weights of a nickel element, a cobalt element, and a manganese element is G2, and a value of G1/G2 is M,
M and N meeting: 0.1≤M≤0.65, N≥(50M+500)°C; or M and N meeting: 0.65<M<1, N≥(950M+500)°C.

2. The battery cell according to claim 1, wherein M and N meet: 0.1≤M≤0.65, N≥ (200M+500)°C.

3. The battery cell according to claim 1 or 2, wherein M and N meet: 0.1≤M≤0.65, (50M+500)°C≤N≤(15000M+500)°C.

4. The battery cell according to claim 1, wherein M and N meet: 0.65 <M<1, N≥ (1000M+500)°C.

5. The battery cell according to claim 1 or 4, wherein M and N meet: 0.65<M < 1, N≤ (3000M+500)°C.

6. The battery cell according to any one of claims 1 to 5, wherein M and N meet: N≤ (1800M+500)°C.

7. The battery cell according to any one of claims 1 to 6, further comprising a negative electrode plate accommodated within the shell,
wherein the negative electrode plate comprises a negative electrode active material, the negative electrode active material comprises graphite and a silicon containing material, a weight of the silicon containing material is B1, a weight of the graphite is B2, and a value of B1/(B1+B2) is P, and
P meets: 0<P<0.6.

8. The battery cell according to claim 7, wherein a tensile strength of the shell is Q, and Q and M meet: 0.1≤M≤0.65, Q≤(50M+50) MPa.

9. The battery cell according to claim 8, wherein Q and M meet: Q≤(1100M+50) MPa.

10. The battery cell according to claim 7, wherein a tensile strength of the shell is Q, and Q and M meet: 0.65 <M< 1, Q≥(300M+50) MPa.

11. The battery cell according to claim 10, wherein Q and M meet: Q≤(950M+50) MPa.

12. The battery cell according to any one of claims 1 to 11, wherein the shell comprises a shell body having an opening, and an end cover for fitting on the opening.

13. The battery cell according to claim 12, wherein a wall thickness of the shell body is 0.05mm-2mm.

14. The battery cell according to claim 12 or 13, wherein the shell body and the end cover are made of the same material.

15. The battery cell according to any one of claims 12 to 14, wherein the shell body comprises two first side plates arranged along a first direction and two second side plates arranged along a second direction, the second side plate is connected to the two first side plates, and the first direction is perpendicular to the second direction;
a ratio of a size of the shell body along the second direction to a size of the shell body along the first direction is 1-50.

16. The battery cell according to any one of claims 1 to 15, wherein a material of the shell comprises steel or nickel.

17. A battery comprising a plurality of battery cells according to any one of claims 1 to 16.

18. An electrical device comprising a battery cell according to any one of claims 1 to 16 for providing electrical energy.
